# EUROPEAN PATENT APPLICATION

(11) **EP 3 754 807 A1**
(43) Date of publication of application: **23.12.2020**
(21) Application number: 18924692.9
(22) Date of filing: 23.08.2018
(51) Int. Cl.: H02J 7/02, H02J 7/00, H02J 7/34

(54) **SUBSTATION DIRECT-CURRENT POWER SUPPLY SYSTEM AND POWER STORAGE METHOD**

(30) Priority: 26.06.2018 CN 201810668259
(71) Applicant: Guangzhou Power Supply Co. Ltd., Tianhe Guangzhou Guangdong 510620 (CN)
(72) Inventor: ZHAO, Haobiao, Guangzhou, Guangdong 510620 (CN); ZHOU, Zhe, Guangzhou, Guangdong 510620 (CN); CONG, Peijie, Guangzhou, Guangdong 510620 (CN); CAI, Di, Guangzhou, Guangdong 510620 (CN); LIU, Shan, Guangzhou, Guangdong 510620 (CN); OU, Weiming, Guangzhou, Guangdong 510620 (CN); CHEN, Yuanjun, Guangzhou, Guangdong 510620 (CN); ZOU, Zhiliang, Guangzhou, Guangdong 510620 (CN); HUANG, Jianyuan, Guangzhou, Guangdong 510620 (CN); YE, Liang, Guangzhou, Guangdong 510620 (CN)
(74) Representative: Petraz, Gilberto Luigi
(86) International application number: PCT/CN2018/101988
(87) International publication number: WO 2020/000618

(57) **Abstract**

The present application relates to a substation direct-current power supply system, comprising a rectification module, a storage battery, a charging control module, and a diode module. An input terminal of the rectification module is connected to an external power supply; a first output terminal of the rectification module is connected to a load. One terminal of the charging control module is connected to a second output terminal of the rectification module, and the other terminal is connected to the storage battery. The charging control module is used to control the rectification module to charge the storage battery when an electrical parameter is lower than a first threshold. The storage battery is connected to an anode of the diode module, and a cathode of the diode module is connected to the load. With the charging control module provided, the rectification module is allowed to charge the storage battery only when the electrical parameter is lower than the first threshold, so as to prevent the storage battery from being in a floating charge state, thereby increasing the service life of the substation direct-current power supply system.

## Description

### TECHNICAL FIELD

The present disclosure relates to a technical field of substations, and more particularly, to a substation direct-current power supply system and a power storage control method.

### BACKGROUND

A storage battery for a substation is generally made up of several battery cells connected in series. When the storage battery is used in series and in a floating charge state, due to inconsistency between the battery cells, each battery cell has a different floating charge voltage, and a level of the floating charge voltage will also has a considerable impact on a service life of the storage battery. When the float charge voltage is too high, corrosion of a grid inside the battery is aggravated, and internal electrolyte undergoes a side reaction of hydrogen evolution, resulting in a high pressure inside the storage battery, therefore an air evacuation valve is opened, resulting in water loss of the storage battery, and degradation of the battery is further aggravated, so that the service life of the storage battery is greatly shortened. When the float charge voltage is too low, since a valve regulated lead acid (VRLA) storage battery is in an undervoltage state for a long term, recombination efficiency of oxygen is reduced, reduction of a cathode is not thorough, lead sulfate accumulates for a long time to form irreversible crystals, a negative plate of the storage battery is gradually passivated, and finally the service life is shortened.

During implementation, the inventors found that the service life of the storage batteries for the substation is designed to be 8-10 years, but after 5-6 years of actual use, capacities of a large part of the batteries have dropped to 80% of the rated capacity, resulting in a short service life of the storage batteries for the substation.

### SUMMARY

On the basis of above, it is necessary to provide a substation direct-current power supply system and a power storage control method regarding to a problem that a service life of a storage battery for the substation is short.

In one aspect, embodiments of the present disclosure provide a substation direct-current power supply system, including a rectification module, a storage battery, a charging control module and a diode module, in which:
an input terminal of the rectification module is connected to an external alternating-current power supply, and a first output terminal of the rectification module is connected to a load;
a terminal of the charging control module is connected to a second output terminal of the rectification module, another terminal of the charging control module is connected to the storage battery, and the charging control module is configured to control the rectification module to charge the storage battery when an electrical parameter of the storage battery is lower than a first threshold; and
the storage battery is connected to an anode of the diode module, and a cathode of the diode module is connected to the load.

In one of the embodiments, the rectification module includes a first rectification unit and a second rectification unit;
an input terminal of the first rectification unit is connected to an external alternating-current power supply, and an output terminal of the first rectification unit is connected to the load; and
an input terminal of the second rectification unit is connected to the external-alternating current power supply, and an output terminal of the second rectification unit is connected to a terminal of the charging control module.

In one of the embodiments, the diode module includes two or more diodes connected in parallel; and
an anode of each diode is connected to the storage battery, and a cathode of each diode is electrically connected to the load.

In one of the embodiments, the charging control module includes a control circuit and a first switch;
the first switch is connected in series between the second rectification unit and the storage battery; and
an input terminal of the control circuit is connected to a storage battery, and the control circuit is configured to control an on-off state of the first switch when the electrical parameter of the storage battery is lower than the first threshold.

In one of the embodiments, the substation direct-current power supply system further includes a second switch connected in series between the storage battery and the load.

In one of the embodiments, the input terminal of the control circuit is further connected to the output terminal of the first rectification unit and the output terminal of the second rectification unit respectively, and the input terminal of the control circuit is further connected to the cathode of the diode module; and

the control circuit is configured to control the second switch to be switched on when the second rectification unit is abnormal or the diode module is abnormal.
In one of the embodiments, the substation direct-current power supply system further includes a third switch, a terminal of the third switch being connected to the output terminal of first rectification unit, and another terminal of the third switch being connected to the load.

In one of the embodiments, the substation direct-current power supply system further includes a fourth switch, a terminal of the fourth switch being connected to the output terminal of the second rectification unit, and another terminal of the fourth switch being connected to a terminal of the first switch.

In another aspect, embodiments of the present disclosure further provide a power storage control method applied to the substation direct-current power supply system according to the above aspect, including:
acquiring the electrical parameter of the storage battery;
controlling the rectification module to charge the storage battery when the electrical parameter of the storage battery is lower than the first threshold; and
cutting off a charging passage from the rectification module to the storage battery when the electrical parameter of the storage battery reaches a second threshold.

In one of the embodiments, controlling the rectification module to charge the storage battery when the electrical parameter of the storage battery is lower than the first threshold includes:
controlling, when the electrical parameter of the storage battery is lower than the first threshold, a switching-on frequency of the first switch in such a way that charging current from the rectification module to the storage battery gradually increases, and the charging current is caused to be within a safe charging range of the storage battery.

One or more embodiments provided by the present disclosure have at least the following advantageous effects. In the substation direct-current power supply system provided by the embodiments of the present disclosure, the input terminal of the rectification module is connected the external alternating-current power supply, the first output terminal of the rectification module is connected to a load, an terminal of the charging control module is connected to the second output terminal of the rectification module, another terminal of the charging control module is connected to the input terminal of the storage battery, the output terminal of the storage battery is connected to the anode of the diode module, and the cathode of the diode module is connected to the load. The rectification module supplies power to the load and the storage battery respectively, and the diode module is connected in series in a forward direction on a power supply circuit of the storage battery and the load, thereby ensuring that: when the rectification module operates normally, the rectification module supplies power to the load; and when the rectification module is abnormal, an electric potential of the storage battery is higher than an electric potential at a connection between the rectification module and the load, the diode module operates, and the storage battery charges the load. With the charging control module provided, the rectification module is allowed to charge the storage battery only when the electrical parameter of the storage battery is lower than the first threshold, so as to prevent the storage battery from being in a floating charge state, thereby increasing a service life of the substation direct-current power supply system.

### BRIEF DESCRIPTION OF THE DRAWINGS

FIG. 1 is a schematic structural diagram illustrating a substation direct-current power supply system in an embodiment.
FIG. 2 is a schematic structural diagram illustrating a substation direct-current power supply system in another embodiment.
FIG. 3 is a schematic structural diagram illustrating a substation direct-current power supply system in a further embodiment.
FIG. 4 is a schematic flow diagram illustrating a power storage control method in an embodiment.
FIG. 5 is a schematic flow diagram illustrating a power storage control method in another embodiment.
FIG. 6 is a structural block diagram illustrating a power storage control device in an embodiment.
FIG. 7 is an internal structure diagram illustrating a computer device in an embodiment.

### DETAILED DESCRIPTION OF THE EMBODIMENTS

In order to facilitate the understanding of the present disclosure, the present disclosure will be described more fully hereinafter with reference to the related accompanying drawings. Preferable embodiments are presented in the accompanying drawings. However, the present disclosure may be embodied in many different forms and is not limited to the embodiments described herein. Rather, the purpose of providing these embodiments is to make the present disclosure more thorough and comprehensive.

It should be noted that when an element is referred to as being "connected" to another element, it can be directly connected to the other element or intervening element may also be present. The terms "mount", "a terminal", "another terminal", and the like are used herein for illustrative purposes only.

Unless otherwise defined, all terms herein, including technical and scientific terms, shall have the same meaning as commonly accepted by a person skilled in the art to which this disclosure belongs. The terms used in the specification of the disclosure herein are for the purpose of describing specific embodiments only and are not intended to limit the present disclosure. The term "and/or" used herein includes any and all combinations of one or more of the associated listed items.

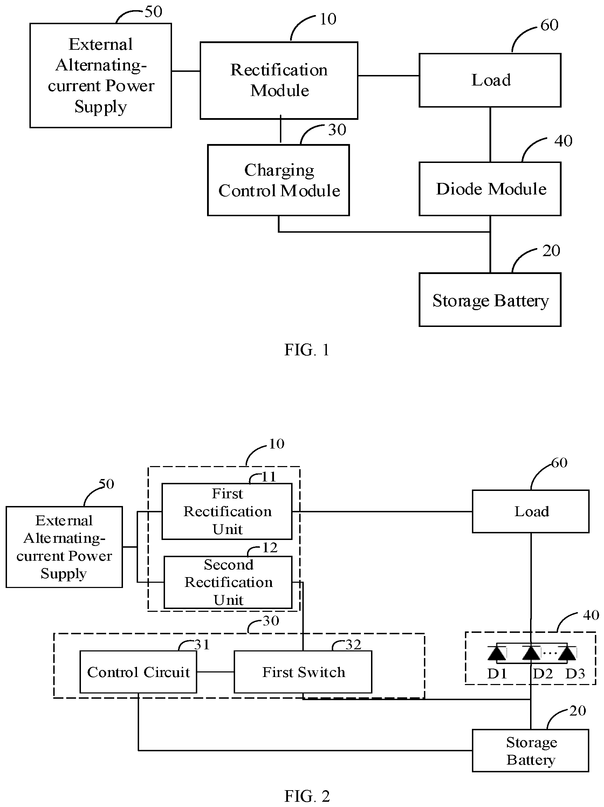

The embodiments of the present disclosure provide a substation direct-current power supply system, as shown in FIG. 1, including a rectification module 10, a storage battery 20, a charging control module 30, and a diode module 40. An input terminal of the rectification module 10 is connected to an external alternating-current power supply 50, and a first output terminal of the rectification module 10 is connected to a load 60. A terminal of the charging control module 30 is connected to a second output terminal of the rectification module 10, and another terminal is connected to the storage battery 20. The charging control module 30 is configured to control the rectification module 10 to charge the storage battery 20 when an electrical parameter of the storage battery 20 is lower than a first threshold. The storage battery 20 is connected to an anode of the diode module 40, and a cathode of the diode module 40 is connected to the load 60.

The first threshold refers to a preset reference voltage value. When the electrical parameter of the storage battery 20 is lower than the first threshold, the storage battery 20 is considered to have a charge capacity at a relatively low level, which may be not able to satisfy a power supply requirement of the load 60. The diode module 40 may include one diode, or two or more diodes connected in parallel, in which cathodes of the diodes are electrically connected, and anodes of the diodes are electrically connected.

Specifically, when the external alternating-current power supply 50 supplies power normally, and the direct-current power supply system operates normally, an output voltage of the rectification module 10 is slightly higher than an output voltage of the storage battery 20. At this time, the rectification module 10 supplies power to the load 60 through a direct-current bus. When the external alternating-current power supply 50 is cut off, for example, mains supply is cut off, that is, the rectification module has no output, the voltage of the storage battery 20 is higher than the output voltage of the rectification module 10, the diode module 40 connected between the storage battery 20 and the load 60 is turned on immediately, and the storage battery 20 supplies power to the load 60 through the diode module 40 seamlessly. In addition, the charging control module 30 controls the rectification module 10 to charge the storage battery 20 by detecting whether the voltage of the storage battery 20 is lower than the first threshold, so as to prevent the storage battery 20 from being in a floating charge state for a long time, which improves a service life of the storage battery 20, and thus improves a service life of the direct-current power supply system. Furthermore, the rectification module 10 and the storage battery 20 in the substation direct-current power supply system provided by the embodiments of the present disclosure both can supply power to the direct-current load 60, and a power supply circuit can be automatically and seamlessly switched to improve reliability of the direct-current system.

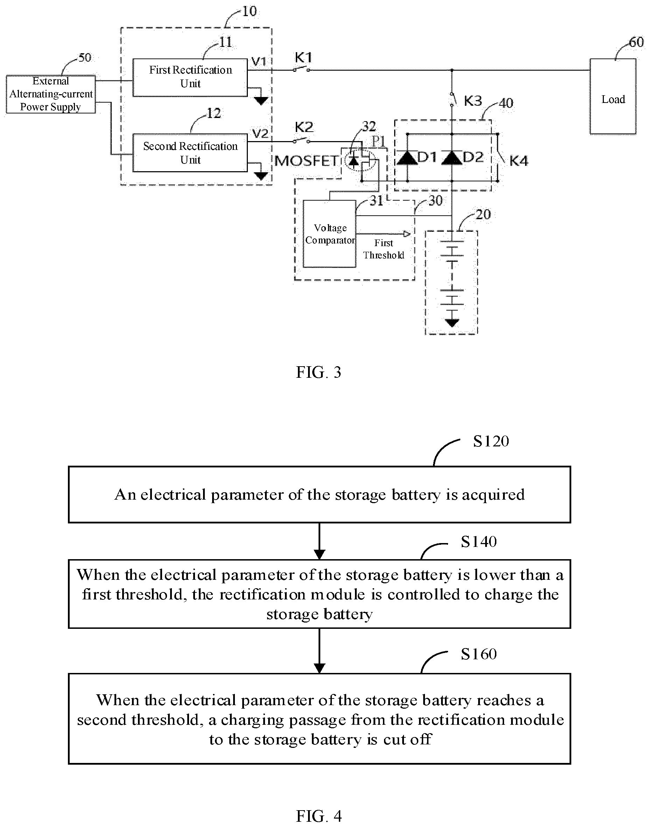

In one of the embodiments, as shown in FIGS. 2 and 3, the rectification module 10 includes a first rectification unit 11 and a second rectification unit 12, an input terminal of the first rectification unit 11 is connected to the external alternating-current power supply 50, an output terminal of the first rectification unit 11 is connected to the load 60, an input terminal of the second rectification unit 12 is connected to the external alternating-current power supply 50, and an output terminal of the second rectification unit 12 is connected to a terminal of the charging control module 30.

During normal operation of the direct-current system, an output voltage of the first rectification unit 11 is slightly higher than an output voltage of the storage battery 20. At this time, the first rectification unit 11 supplies power to the load 60 through the direct-current bus. When the mains supply is cut off, and both the first rectification unit 11 and the second rectification unit 12 have no output, the voltage of the storage battery 20 is higher than the output voltage of the rectification module 12, the diode module 40 connected between the storage battery 20 and the load 60 is turned on immediately, and the storage battery 20 supplies power to the load 60 through the diode module 40 seamlessly. For example, when the first rectification unit 11 is abnormal and has no output, and the charging control module 30 cuts off a passage between the second rectification unit 12 and the diode (the storage battery 20), the diode module 40 is turned on immediately. At this time, the dormant storage battery 20 supplies power to the direct-current load 60 through the diode module 40 seamlessly. When the first rectification unit 11 is abnormal and has no output, and the charging control module 30 connects the passage between the second rectification unit 12 and the diode module 40 (the storage battery 20), the output voltage of the second rectification unit 12 is higher than the output voltage of the first rectification unit 11 and the output voltage of the storage battery 20, the diode module 40 is turned on immediately. At this time, the second rectification unit 12 supplies power to the direct-current load 60 through the charging control module 30 and the diode module 40 in sequence.

In one of the embodiments, as shown in FIGS. 2 and 3, the diode module 40 includes two or more diodes connected in parallel, an anode of each diode is connected to the storage battery 20, and a cathode of each diode is electrically connected to the load 60.

In order to ensure the reliability of the substation direct-current power supply system, the diode module 40 includes two or more diodes connected in parallel, which adopts a redundant N+1 design, thereby ensuring that when any of the diodes fails, there is no affect on supplying power to the direct-current load 60. For example, as shown in FIG. 2, when the diode D1 is turned off, the diodes D2, D3 and the like still continue to operate. As a result, the uninterruptible power supply of the storage battery to the load 60 cannot be affected.

In one of the embodiments, as shown in FIGS. 2 and 3, the charging control module 30 includes a control circuit 31 and a first switch 32, the first switch 32 is connected in series between the second rectification unit 12 and the storage battery 20, an input terminal of the control circuit 31 is connected to the storage battery 20, and the control circuit 31 is configured to control an on-off state of the first switch 32 when an electrical parameter of the storage battery 20 is lower than the first threshold.

During normal operation of the direct-current system, an output voltage of the first rectification unit 11 is slightly higher than an output voltage of the storage battery 20. At this time, the first rectification unit 11 supplies power to the load 60 through the direct-current bus. When the mains supply is cut off, and both the first rectification unit 11 and the second rectification unit 12 have no output, the voltage of the storage battery 20 is higher than the output voltage of the rectification module 12, the diode module 40 connected between the storage battery 20 and the load 60 is turned on immediately, and the storage battery 20 supplies power to the load 60 through the diode module 40 seamlessly. For example, when the first rectification unit 11 is abnormal and has no output, and the control circuit 31 controls the first switch 32 to be turned off, the diode module 40 is turned on immediately. At this time, the dormant storage battery 20 supplies power to the direct-current load 60 through the diode module 40 seamlessly. When the first rectification unit 11 is abnormal and has no output, and the control circuit 31 controls the metal-oxide-semiconductor field effect transistor (MOSFET) to be turned on, the output voltage of the second rectification unit 12 is higher than the output voltage of the first rectification unit 11 and the output voltage of the storage battery 20, and the diode module 40 is turned on immediately. At this time, the second rectification unit 12 supplies power to the direct-current load 60 through the first switch 32 and the diode module 40 in sequence. When the control circuit 31 detects that the electrical parameter of the storage battery 20 is lower than the first threshold, the control circuit 31 controls an on state of the first switch 32, so that the second rectification unit 12 charges the storage battery 20.

In one of the embodiments, as shown in FIG. 3, the substation direct-current power supply system includes a second switch K4, and the second switch K4 is connected in series between the storage battery 20 and the load 60.

In order to improve the reliability of the power supply of the substation direct-current power supply system, the second switch K4 is connected in series between the storage battery 20 and the load 60. When the diode module 40 is turned off, the second switch K4 can be switched on immediately, so that the substation direct-current power supply system can be restored to a state of a conventional direct-current system, which still can ensure that the storage battery 20 uninterruptedly supplies power to the load 60.

In one of the embodiments, as shown in FIG. 3, the input terminal of the control circuit 31 is further connected to the output terminal of the second rectification unit 12 and the cathode of the diode module 40 respectively, and the control circuit 31 is configured to control the second switch K4 to be switched on when the second rectification unit 12 is abnormal or the diode module 40 is abnormal.

In order to prevent the storage battery 20 from being unable to supply power to the load 60 and the quality and reliability of the power supply from being unable to be ensured when the second rectification unit 12 or the diode module 40 is abnormal, the control circuit 31 detects a parameter of a current/voltage output from the output terminal of the second rectification unit 12, and at the same time, the control circuit 31 detects a parameter of a current output from the cathode of the diode module 40 or a potential parameter of the cathode of the diode module 40. The control circuit 31 determines whether the second rectification unit 12 and the diode module 40 are abnormal according to the acquired electrical parameter. If the second rectification unit 12 or the diode module 40 is abnormal, in order to ensure that the storage battery 20 can uninterruptedly supply power to the load 60, the control circuit 31 controls the second switch K4 to be switched on, to provide a connecting passage from the storage battery 20 to the load 60.

In one of the embodiments, the substation direct-current power supply system further includes a third switch K1, a terminal of the third switch K1 is connected to the output terminal of first rectification unit 11, and another terminal of the third switch K1 is connected to the load 60.

In one of the embodiments, the substation direct-current power supply system further includes a fourth switch K2, a terminal of the fourth switch K2 is connected to the output terminal of the second rectification unit 12, and another terminal of the fourth switch K2 is connected to a terminal of the first switch 32.

The fourth switch K2 is connected in series between the second rectification unit 12 and the first switch 32. When the substation direct-current power supply system supplies power to the load 60 normally, the fourth switch K2 is switched on, to ensure that a power supply circuit from the first rectification unit 11 and the second rectification unit 12 to the load 60 is in connection. Optionally, the fourth switch K2 may be a switch of a type of an overcurrent protector. When the current output from the second rectification unit 12 is too large, the fourth switch K2 is switched off.

In one of the embodiments, a fifth switch K3 is further included. A terminal of the fifth switch K3 is connected to the cathode of the diode module 40, and another terminal of the fifth switch K3 is connected the load 60.

In order to further ensure the reliability of the substation direct-current power supply system, the fifth switch K3 is connected in series between the cathode of the diode module 40 and the load 60. When the substation direct-current power supply system supplies power to the load 60 normally, the fifth switch K3 is switched on. When current of the storage battery 20 or the second rectification unit 12 supplies to the load 60 is too large, the fifth switch K3 can be switched off, so as to ensure security of the power supply to the load 60. Optionally, the fifth switch K3 may be a switch of a type of an overcurrent protector, and the like.

In one of the embodiments, the storage battery 20 is a storage battery 20 with a voltage level of 48V, 110V or 220V, the first rectification unit 11 is a rectification unit with a voltage level of 48V, 110V or 220V, and the second rectification unit 12 is a rectification unit with a voltage level of 48V, 110V or 220V.

The substation direct-current power supply system provided by the embodiments of the present disclosure is suitable for any storage battery 20 used in series, including but not limited to a lead-acid battery, a lithium battery, a nickel-metal hydride battery and other different types of batteries, and the voltages of the rectification module 10 and the storage battery 20 include but are not limited to the rectification modules 10 and the storage batteries 20 with various voltage levels, such as 48V, 110V or 220V, etc.

In another aspect, as shown in FIG. 4, the embodiments of the present disclosure further provide a power storage control method applied to the substation direct-current power supply system described above, including:
S120: acquiring the electrical parameter of the storage battery;
S140: controlling the rectification module 10 to charge the storage battery 20 when the electrical parameter of the storage battery 20 is lower than the first threshold,; and
S160: cutting off a charging passage from the rectification module to the storage battery when the electrical parameter of the storage battery 20 reaches a second threshold.

In the substation direct-current power supply system, maintenance of the storage battery directly affects the service life and reliability of the whole system. Check discharge of the storage battery is a key point of a maintenance operation of the storage battery 20 in the substation. After the storage battery 20 finishes discharge, the storage battery needs to be charged to ensure that the storage battery supplies power in a fully charged state at any time. The embodiments of the present disclosure provide a power storage control method, which detects a charge capacity of the storage battery 20 at present by acquiring the electrical parameter of the storage battery 20. When the electrical parameter of the storage battery 20 is lower than the first threshold, the rectification module 10 is controlled to charge the storage battery 20. During the charging of the storage battery 20, the electrical parameter of the storage battery 20 is continuously detected. When the electrical parameter of the storage battery 20 reaches a second threshold, the storage battery is considered to be nearly fully charged and in a saturated state. At this time, the charging passage from the rectification module 10 to the storage battery 20 can be cut off.

In one of the embodiments, the power storage control method further includes the following steps.

At S180, the rectification module 10 is controlled to charge the storage battery 20 regularly.

In addition, the control circuit 31 can be controlled to control the first switch 32 to be switched on or off regularly, so as to realize regular charging of the storage battery 20.

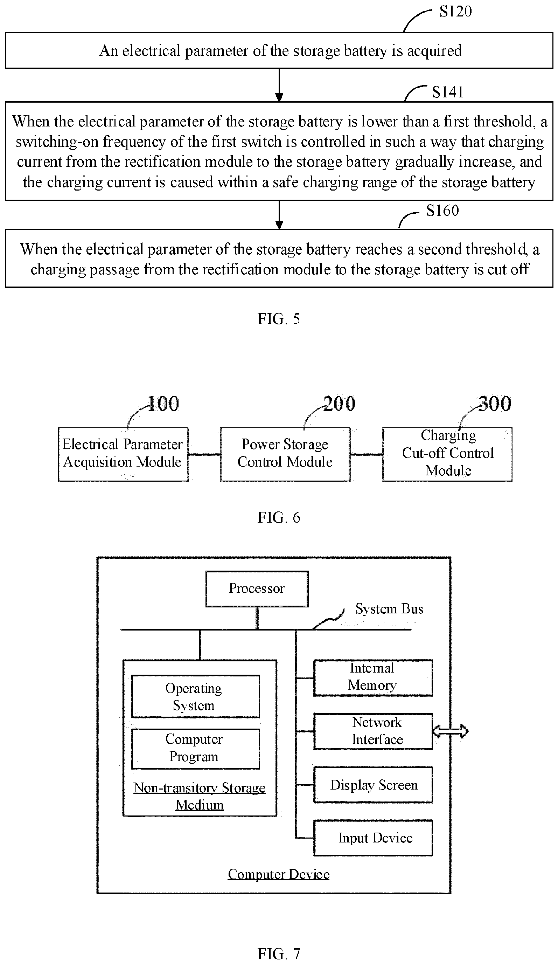

In one of the embodiments, as shown in FIG. 5, the step of controlling the rectification module 10 to charge the storage battery 20 when the electrical parameter of the storage battery 20 is lower than the first threshold includes:
S141: controlling, when the electrical parameter of the storage battery 20 is lower than the first threshold, a switching-on frequency of the first switch 32 in such a way that charging current from the rectification module 10 to the storage battery 10 gradually increase, and the charging current is caused to be within a safe charging range of the storage battery 20.

The safe charging range of the battery 20 refers to a current range that does not cause a large current impact on the battery 20. Specifically, when the rectification module 10 charges the battery 20, in order to ensure the reliability of charging, the switching-on frequency of the first switch 32 is controlled, and thus the current flowing from the rectification module 10 to the battery 20 is controlled, so that the charging current of the rectification module 10 to the battery gradually increases, and the charging current is controlled to be within the safe charging range of the battery 20.

In a specific embodiment, before charging is started, the current value of the first switch 32 is set by the control circuit 31, and the current with the current value is output by the rectification module 10 to charge the storage battery 20 during charging. Taking the storage battery 20 of a group of 108 cells with a nominal voltage of 2V and a nominal capacity of 500AH as an example, by inputting these pieces of information to the control circuit 31, the control circuit 31 can immediately determine that the storage battery has a safe floating charge voltage of 240V, an average charge voltage of 254V, and a safe charging current of 50A (calculated at a 10-hour rate). After the storage battery 20 finishes discharging, the control circuit 31 modulates the on-off state of the first switch 32 (that is, the switching-on frequency of the first switch 32), to control an output current of the second rectification unit 12 within a safe current of 50A to charge the storage battery 20 with a constant current, therefore an impact of high current charging on the storage battery will not occur. When the output voltage of the battery group reaches the average charge voltage of 254V, the control circuit 31 controls the first switch 32 to be fully switched on, and the second rectification unit 12 charges the storage battery 20 with a constant voltage.

A power storage control device, as shown in FIG 6, includes:
an electrical parameter acquisition module, configured to acquire the electrical parameter of the storage battery 20;
a power storage control module, configured to control the rectification module 10 to charge the storage battery 20 when the electrical parameter of the storage battery 20 is lower than the first threshold; and
a charging cut-off control module, configured to cut off the charging passage from the rectification module 10 to the storage battery 20 when the electrical parameter of the storage battery 20 reaches the second threshold.

Specifically, the electrical parameter acquisition module acquires the electrical parameter of the storage battery 20 and sends it to the power storage control module and the charging cut-off control module. The power storage control module controls the rectification module 10 to charge the storage battery 20 when the electrical parameter of the storage battery 20 is lower than the first threshold. The charging cut-off control module cuts off the charging passage from the rectification module 10 to the storage battery 20 when the electrical parameter of the storage battery 20 reaches the second threshold.

For specific limitations of the power storage control device, reference may be made to the above limitations on the power storage control method, which will not be repeated here. Each of the above modules in the power storage control module may be implemented in whole or in part by software, hardware and combinations thereof. Each of the above modules may be embedded in or independent of a processor in a computer device in hardware forms, or may be stored in the memory of the computer device in software forms, so that the processor can invoke and execute the operations corresponding to each of the above modules.

In an embodiment, a computer device is provided. The computer device may be a terminal device, and an internal structure diagram thereof may be as shown in FIG. 7. The computer device includes a processor, a memory, a network interface, a display screen, and an input device, all of which connected by system buses. The processor of the computer device is configured to provide computing and control capabilities. The memory of the computer device includes a non-transitory storage medium and an internal memory. The non-transitory storage medium stores an operating system and a computer program. The internal memory provides an environment for the operation of the operating system and the computer program in the non-transitory storage medium. The network interface of the computer device is configured to communicate with an external terminal via a network connection. The computer program is executed by the processor to realize a substation direct-current power supply method. The display screen of the computer device may be a liquid crystal display or an electronic ink display, and the input device of the computer device may be a touch layer covered on the display screen, or may be a button, a trackball or a touchpad provided on the computer device casing, and may also be an external keyboard, a touchpad or a mouse.

It will be understood by those skilled in the art that the structure shown in FIG. 7 is only a block diagram of a part of the structure related to the solution of the present disclosure, and does not constitute a limitation of the computer device to which the solution of the present disclosure is applied. The specific computer device may include more or fewer components than those shown in the figure, or combine some components, or have different component arrangements.

A computer device including a memory and a processor is provided. The memory stores a computer program, and the steps below will be implemented when the processor executes the computer program:
S120: acquiring the electrical parameter of the storage battery 20;
S140: controlling the rectification module 10 to charge the storage battery 20 when the electrical parameter of the storage battery 20 is lower than the first threshold; and
S160: cutting off a charging passage from the rectification module to the storage battery when the electrical parameter of the storage battery 20 reaches a second threshold.

A computer-readable storage medium storing a computer program is provided. The steps below will be implemented when a processor executes the computer program:
S120: acquiring the electrical parameter of the storage battery 20;
S140: controlling the rectification module 10 to charge the storage battery 20 when the electrical parameter of the storage battery 20 is lower than the first threshold; and
S160: cutting off a charging passage from the rectification module to the storage battery when the electrical parameter of the storage battery 20 reaches a second threshold.

Those of ordinary skill in the art may understand that all or part of the processes in the method of the above embodiments may be completed by instructing relevant hardware by the computer program, and the computer program may be stored in a non-transitory computer readable storage medium. When the computer program is executed, the processes of the above methods in the embodiments may be included. Any reference to the memory, the storage, the database or other medium used in various embodiments provided in the present disclosure may include a non-transitory memory and/or a transitory memory. A non-transitory memory may include a read only memory (ROM), a programmable ROM (PROM), an electrically programmable ROM (EPROM), an electrically erasable programmable ROM (EEPROM) or a flash memory. A transitory memory may include a random access memory (RAM) or an external cache memory. By way of illustration and not limitation, a RAM is available in a variety of forms, such as a Static RAM (SRAM), a Dynamic RAM (DRAM), a Synchronous DRAM (SDRAM), a Dual Data Rate SDRAM (DDRSDRAM), an Enhanced SDRAM (ESDRAM), a Synchlink DRAM (SLDRAM), a Rambus Direct RAM (RDRAM), a Direct Rambus Dynamic RAM (DRDRAM), a Rambus Dynamic RAM (RDRAM), and the like.

Each of the technical features in the above embodiments may be combined arbitrarily. To simplify the description, not all the possible combinations of each of the technical features in the above embodiments are described. However, all of the combinations of these technical features should be considered as within the scope of this disclosure, as long as such combinations do not contradict with each other.

The above-mentioned embodiments only illustrate several implementation modes of the present disclosure, and the description is relatively specific and detailed, but it should not be understood as a limitation to the patent scope of the present disclosure. It should be noted that a plurality of variations and modifications may be made by a person skilled in the art without departing from the scope of the present disclosure, which are all within the scope of protection of the present disclosure. Therefore, the protection scope of the present disclosure shall be defined by the appended claims.

## Claims

1. A substation direct-current power supply system, **characterized by** comprising a rectification module, a storage battery, a charging control module and a diode module, wherein:
an input terminal of the rectification module is connected to an external alternating-current power supply, and a first output terminal of the rectification module is connected to a load;
a terminal of the charging control module is connected to a second output terminal of the rectification module, another terminal of the charging control module is connected to the storage battery, and the charging control module is configured to control the rectification module to charge the storage battery when an electrical parameter of the storage battery is lower than a first threshold; and
the storage battery is connected to an anode of the diode module, and a cathode of the diode module is connected to the load.

2. The substation direct-current power supply system according to claim 1, **characterized in that**:
the rectification module comprises a first rectification unit and a second rectification unit;
an input terminal of the first rectification unit is connected to the external alternating-current power supply, and an output terminal of the first rectification unit is connected to the load; and
an input terminal of the second rectification unit is connected to the external-alternating current power supply, and an output terminal of the second rectification unit is connected to a terminal of the charging control module.

3. The substation direct-current power supply system according to claim 2, **characterized in that**:
the diode module comprises two or more diodes connected in parallel; and
an anode of each diode is connected to the storage battery, and a cathode of each diode is electrically connected to the load.

4. The substation direct-current power supply system according to claim 2 or 3, **characterized in that**:
the charging control module comprises a control circuit and a first switch;
the first switch is connected in series between the second rectification unit and the storage battery; and
an input terminal of the control circuit is connected to the storage battery, and the control circuit is configured to control an on-off state of the first switch when the electrical parameter of the storage battery is lower than the first threshold.

5. The substation direct-current power supply system according to claim 4, **characterized in that** the substation direct-current power supply system further comprises a second switch connected in series between the storage battery and the load.

6. The substation direct-current power supply system according to claim 5, **characterized in that**:
the input terminal of the control circuit is further connected to the output terminal of the first rectification unit and the output terminal of the second rectification unit respectively, and the input terminal of the control circuit is further connected to the cathode of the diode module; and
the control circuit is configured to control the second switch to be switched on when the second rectification unit is abnormal or the diode module is abnormal.

7. The substation direct-current power supply system according to claim 5 or 6, **characterized in that** the substation direct-current power supply system further comprises a third switch, a terminal of the third switch being connected to the output terminal of first rectification unit, and another terminal of the third switch being connected to the load.

8. The substation direct-current power supply system according to claim 7, **characterized in that** the substation direct-current power supply system further comprises a fourth switch, a terminal of the fourth switch being connected to the output terminal of the second rectification unit, and another terminal of the fourth switch being connected to a terminal of the first switch.

9. A power storage control method applied to the substation direct-current power supply system according to any one of claims 1 to 8, **characterized by** comprising:
acquiring the electrical parameter of the storage battery;
controlling the rectification module to charge the storage battery when the electrical parameter of the storage battery is lower than the first threshold; and
cutting off a charging passage from the rectification module to the storage battery when the electrical parameter of the storage battery reaches a second threshold.

10. The power storage control method according to claim 9, **characterized in that** controlling the rectification module to charge the storage battery when the electrical parameter of the storage battery is lower than the first threshold comprises:
controlling, when the electrical parameter of the storage battery is lower than the first threshold, a switching-on frequency of the first switch in such a way that charging current from the rectification module to the storage battery gradually increases, and the charging current is caused to be within a safe charging range of the storage battery.
